# EUROPÄISCHE PATENTANMELDUNG

(11) **EP 2 756 906 A1**
(43) Veröffentlichungstag der Anmeldung: **23.07.2014**
(21) Anmeldenummer: 13151994.4
(22) Anmeldetag: 21.01.2013
(51) Int. Cl.: B23K 9/04, B23K 26/34, B23P 6/04, B23P 6/00, F01D 5/00

(54) **Auftragsschweißen mit äußerer Konturschweißung und innerer Auffüllung und Bauteil**

(71) Anmelder: Siemens Aktiengesellschaft, 80333 München (DE)
(72) Erfinder: Burbaum, Bernd, 14612 Falkensee (DE)

(57) **Zusammenfassung**

Durch die Verwendung angepasster Laserparameter beim Auftragsschweißen bzw. das Verwenden einer äußeren Schweißkontur entlang der Kontur (7) eines aufzutragenden Bereiches wird die Rissanfälligkeit zwischen Auftragsschweißung und Substrat verringert.

## Beschreibung

Die Erfindung betrifft ein Auftragsschweißen, bei dem um die aufzuarbeitende Fläche eine äußere Konturschweißung gelegt wird und dann innerhalb dieser Konturschweißung weiteres Material aufgetragen wird und ein Bauteil.

Auftragsschweißverfahren sind bekannt, um bei zu reparierenden Bauteilen, die an Materialverlust des Substrats litten, dieses aufzufüllen.

Ebenso sind bekannt Laserauftragsschweißverfahren.

Bei jedem Schweißverfahren kommt es darauf an, die Schweißung so durchzuführen, dass keine Risse zwischen der Auftragsschweißung und dem Substrat auftreten.

Es ist daher Aufgabe der Erfindung ein Verfahren aufzuzeigen, bei dem die Rissanfälligkeit zwischen Auftragsschweißung und Substrat verringert wird.

Die Aufgabe wird gelöst durch ein Verfahren gemäß Anspruch 1 und ein Bauteil gemäß Anspruch 7.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine schematische Darstellung der Vorgehensweise beim Auffüllen;
- Figur 2: eine Liste von Superlegierungen.

Die Beschreibung und die Figuren stellen nur Ausführungsbeispiele der Erfindung dar.

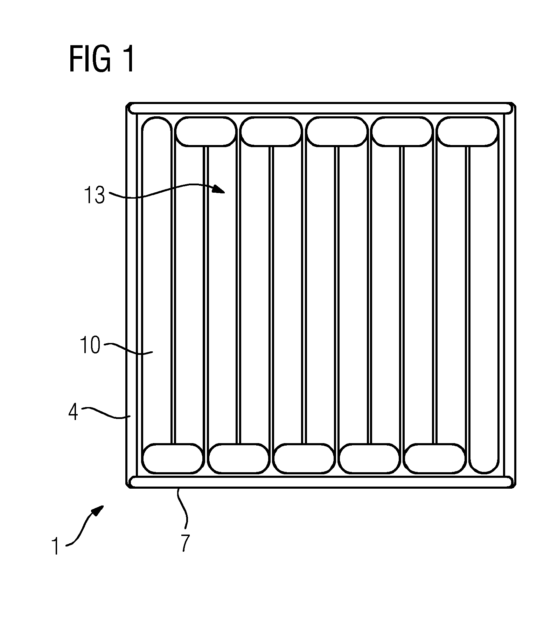

In Figur 1 ist ein zu schweißender Bereich 1 mit Schweißbahnen 4, 10 dargestellt.

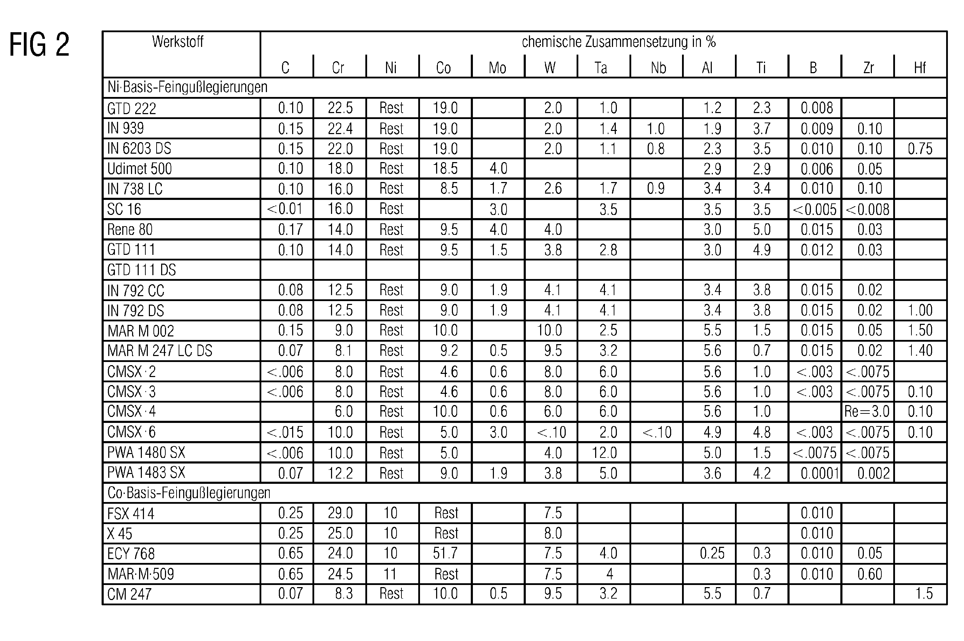

Der zu schweißende Bereich 1 ist vorzugsweise eine Oberfläche einer Nickel- oder Kobalt-basierten Superlegierung, insbesondere aus einer Legierung gemäß Figur 2.

Der zu schweißende Bereich 1 weist eine äußere Kontur 7 auf.

Als erstes wird entlang der äußeren Kontur 7 eine Konturschweißung 4 aufgetragen, die einen geschlossenen Verlauf entlang der Kontur 7 darstellt.

Die Kontur 7 stellt vorzugsweise eine Kante einer Mulde dar. Die Konturschweißung 4 wird durch eine einzige Schweißbahn oder Schweißraupe gebildet.

Innerhalb der Konturschweißung 4 wird erst dann zumindest eine Schweißbahn 10 aufgetragen, die vorzugsweise mäanderförmig abgefahren wird oder mehrere Schweißbahnen 10', 10", ... und so die Fläche 13 innerhalb der Konturschweißung 4 vollständig auffüllt.

Um die Rissanfälligkeit zwischen Auftragsschweißung, die hier durch die Konturschweißung 4 und die Schweißbahn 10 gebildet wird, und Substrat zu vermeiden, wird die äußere Konturschweißung 4 mit einer geringen Leistung P1 aufgetragen, wobei die Leistung P1 mindestens 10%, insbesondere mindestens 20% niedriger ist als die Leistung P2, die für die innere Schweißbahn 10 oder die inneren Schweißbahnen 10', 10" verwendet wird.

Durch den geringeren Energieeintrag entlang der Kontur 7 wird die Rissanfälligkeit der Auftragsschweißung zum Substrat verbessert.

Vorzugsweise wird ebenso ein kleinerer Laserstrahldurchmesser d7 für die äußere Konturschweißung 4 verwendet, so dass sich eine kleinere Breite für die Schweißbahn der äußeren Konturschweißung 4 ergibt. Sie ist vorzugsweise mindestens 10%, ganz vorzugsweise mindestens 20% schmaler.

Vorzugsweise wird die Verfahrensgeschwindigkeit bei der Konturschweißung 4 angepasst, wobei die Verfahrensgeschwindigkeit beim Auftragsschweißen für die Konturschweißung 4 mindestens 10%, insbesondere mindestens 20% größer ist als für die Verfahrgeschwindigkeit der inneren Schweißbahn 10.

Die Materialien für die Konturschweißung 4 und die inneren Schweißbahnen 10 sind vorzugsweise identisch.

Substrat und/oder Schweißstrahl werden vorzugsweise gegeneinander verfahren.

Vorzugsweise wird ein Laserauftragsschweißen verwendet, bei dem dann wiederum vorzugsweise eine Zoomoptik mit verfahrbarer Fokussierlinse im Gehäuse oder ein schaltbarer Wechsel der Linse angewendet wird.

## Patentansprüche

1. Verfahren zum Auftragsschweißen,
bei dem zuerst eine äußere Konturschweißung (4) aufgetragen wird,
die entlang der Kontur (7) des aufzutragenden Bereichs (1) gelegt wird,
insbesondere wobei die Kontur (7) die Kante eines zu schweißenden Bereichs (1) darstellt,
wobei dann erst die Fläche innerhalb der Konturschweißung (4) aufgefüllt wird.

2. Verfahren nach Anspruch 1,
bei dem die Leistung (P1) für die Konturschweißung (4) mindestens 10%,
insbesondere mindestens 20%
niedriger ist als die Leistung (P2) für eine innere Schweißbahn (10) oder innere Schweißbahnen (10', 10", ...).

3. Verfahren nach einem oder beiden der Ansprüche 1 oder 2, bei dem die Breite der Konturschweißung (4) mindestens 10%, insbesondere mindestens 20%
geringer ist als die Breite der inneren Schweißbahn (10) oder Schweißbahnen (10', 10", ...).

4. Verfahren nach einem oder mehreren der Ansprüche 1, 2 oder 3,
bei dem die Verfahrgeschwindigkeit (V1) für die äußere Konturschweißung (4) mindestens 10%,
insbesondere mindestens 20%
größer ist als die Verfahrgeschwindigkeit (V2) der inneren Schweißbahn (10) oder Schweißbahnen (10', 10", ...).

5. Verfahren nach einem oder mehreren der vorhergehenden Ansprüche 1 bis 4,
bei dem die innere Schweißbahn (10) mäanderförmig aufgetragen wird.

6. Verfahren nach einem oder mehreren der vorhergehenden Ansprüche,
bei dem ein Laserauftragsschweißen verwendet wird.

7. Bauteil mit einer Auftragsschweißung,
die eine äußere Konturschweißung (4) mit geringerer Breite aufweist als die Breite der inneren Schweißbahn (10) oder Schweißbahnen (10', 10", ...),
insbesondere mindestens 10% schmaler,
ganz insbesondere mindestens 20% schmaler.
